# EUROPEAN PATENT APPLICATION

(11) **EP 4 832 133 A1**
(43) Date of publication of application: **28.10.2026**
(21) Application number: 24908041.7
(22) Date of filing: 17.12.2024
(51) Int. Cl.: H01M 10/0562, H01M 10/052

(54) **SOLID ELECTROLYTE AND ALL-SOLID-STATE BATTERY COMPRISING SAME**

(30) Priority: 18.12.2023 KR 20230185149
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR); LEE, Wooyoung, Seoul, 03722 (KR); LEE, Kyu Hyoung, Seoul, 03722 (KR); KIM, Yong Hwan, Seoul, 03722 (KR)
(74) Representative: Pfenning, Meinig & Partner mbB
(86) International application number: PCT/KR2024/020549
(87) International publication number: WO 2025/135758

(57) **Abstract**

The present invention relates to a solid electrolyte including sulfide-based solid electrolyte particles; and a plurality of La-containing fine particles disposed on a surface of the sulfide-based solid electrolyte particles.

## Description

### [TECHNICAL FIELD]

The present invention relates to a solid electrolyte and an all-solid-state battery including the same.

### [BACKGROUND ART]

As research on safety problems and energy density of high-capacity batteries has attracted attention, all-solid-state batteries have been spotlighted as next-generation batteries.

The all-solid-state battery is a battery in which safety of the battery is secured by replacing a liquid electrolyte, which may cause explosion, with a solid electrolyte, and thus a flammable solvent is not used in the battery, and ignition or explosion due to reactions such as decomposition reactions of a conventional electrolyte solution does not occur at all.

In addition, since lithium metal or a lithium alloy can be used as a negative electrode material, energy density with respect to the mass and volume of the battery can be improved.

As a solid electrolyte used in the all-solid-state battery, an inorganic solid electrolyte is generally used, and various studies are being conducted on a sulfide-based solid electrolyte having an argyrodite structure, such as a composition of Li₆PS₅Cl, among the all-solid-state batteries.

An argyrodite-based sulfide solid electrolyte has high lithium ion conductivity, but has a problem of poor moisture stability, such as a sharp decrease in ionic conductivity because S among the constituent elements sensitively reacts with moisture in the atmosphere.

In order to solve this, attempts have been made to improve moisture stability by controlling the composition itself, such as introducing a doping element into a basic argyrodite-based solid electrolyte, or by surface modification. However, there is currently no technology that fundamentally prevents a reaction between the argyrodite-based solid electrolyte and moisture in the atmosphere.

### [DETAILED DESCRIPTION OF THE INVENTION]

### [Technical Problem]

Accordingly, one object of the present invention is to provide a solid electrolyte, a method for manufacturing the same, and an all-solid-state battery including the same, wherein the solid electrolyte has high ionic conductivity as a sulfide-based solid electrolyte, and at the same time, a reaction with moisture in the atmosphere is fundamentally controlled, thereby improving moisture stability.

### [Technical Solution]

One embodiment of the present invention provides a solid electrolyte including: sulfide-based solid electrolyte particles; and a plurality of La-containing fine particles disposed on a surface of the sulfide-based solid electrolyte particles.

The sulfide-based solid electrolyte particles may be argyrodite-based solid electrolyte particles.

The plurality of La-containing fine particles may be present in a form in which they are attached to the surface of the sulfide-based solid electrolyte particles while being spaced apart from each other.

The La-containing fine particles may include a La oxide.

The La-containing fine particles may include a La₂O₃ phase.

The La-containing fine particles may further include a La(OH)₃ phase.

A content of the La-containing fine particles may be 2 to 30 wt% based on the total weight of the solid electrolyte.

A ratio of an average particle diameter (D50) of the La-containing fine particles to an average particle diameter (D50) of the sulfide-based solid electrolyte may be 0.0005 to 0.017.

The average particle diameter (D50) of the sulfide-based solid electrolyte may be 0.6 to 12.0 µm.

The average particle diameter (D50) of the La-containing fine particles may be 5 to 400 nm.

The solid electrolyte may exhibit a first peak in a range of 30.2°≤2θ≤30.3° when analyzed by an X-ray diffraction (XRD) pattern.

When the solid electrolyte is exposed for 60 minutes to an atmospheric atmosphere at 25°C and a relative humidity of 40%, a reduction rate of an intensity of the first peak may be 20% or less.

The solid electrolyte may exhibit a second peak in a range of 25.5°≤2θ≤25.7° when analyzed by an X-ray diffraction (XRD) pattern.

When the solid electrolyte is exposed for 60 minutes to an atmospheric atmosphere at 25°C and a relative humidity of 40%, a reduction rate of an intensity of the second peak may be 20% or less.

### [Advantageous Effects]

The solid electrolyte according to one embodiment of the present invention further includes La-containing fine particles on a surface of a sulfide-based solid electrolyte, thereby not only implementing excellent ionic conductivity, but also improving stability against moisture in the atmosphere.

### [BRIEF DESCRIPTION OF THE DRAWINGS]

FIG. 1 is a conceptual diagram of a solid electrolyte according to one embodiment of the present invention.
FIG. 2 is an SEM image of solid electrolytes manufactured according to Example 2, Example 3, and Reference Example 3.
FIG. 3 shows results of X-ray diffraction pattern analysis over time when the solid electrolyte manufactured according to Comparative Example 1 is exposed to an atmospheric atmosphere at a relative humidity of 40%.
FIG. 4 shows results of X-ray diffraction pattern analysis over time when the solid electrolyte manufactured according to Example 2 is exposed to an atmospheric atmosphere at a relative humidity of 40%.
FIG. 5 shows results of X-ray diffraction pattern analysis over time when the solid electrolyte manufactured according to Example 3 is exposed to an atmospheric atmosphere at a relative humidity of 40%.
FIG. 6 shows results of X-ray diffraction pattern analysis over time when the solid electrolyte manufactured according to Reference Example 3 is exposed to an atmospheric atmosphere at a relative humidity of 40%.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Solid Electrolyte

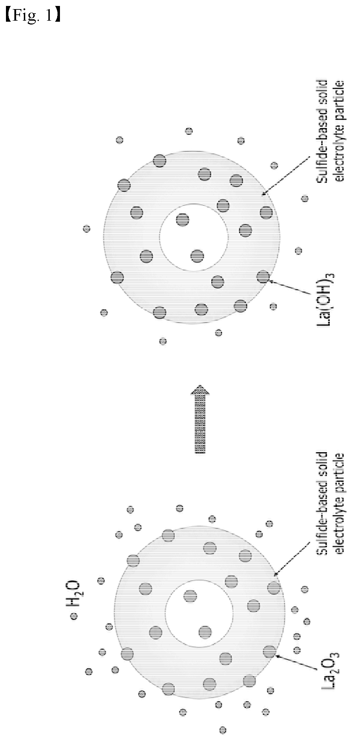

FIG. 1 is a conceptual diagram of a solid electrolyte according to one embodiment of the present invention.

Referring to FIG. 1, the solid electrolyte according to one embodiment of the present invention includes sulfide-based solid electrolyte particles.

More specifically, the sulfide-based solid electrolyte particles may be argyrodite-based solid electrolyte particles. Accordingly, excellent ionic conductivity can be implemented.

The argyrodite-based solid electrolyte is not particularly limited as long as it has an argyrodite-based crystal structure.

The argyrodite-based solid electrolyte may further include, in addition to basic elements Li, P, S, and a halogen element, other doping elements selectively as necessary.

The other doping elements may be, for example, Al, Zr, Zn, Si, Sn, B, C, Ga, Ge, Na, Mg, Ca, or a combination thereof.

However, although such sulfide-based solid electrolyte particles have excellent ionic conductivity immediately after synthesis, S among the constituent elements reacts with moisture in the atmosphere, causing deterioration of the crystal structure, and thus there is a problem in that ionic conductivity is sharply degraded.

Accordingly, the solid electrolyte according to one embodiment of the present invention further includes a plurality of La-containing fine particles disposed on the surface of the sulfide-based solid electrolyte particles. Since the solid electrolyte further includes the La-containing fine particles, moisture stability can be improved, and degradation of ionic conductivity over time after synthesis can be reduced. More specifically, the La-containing fine particles have higher reactivity with moisture in the atmosphere than the sulfide-based solid electrolyte, and when present in a composite form together with the sulfide-based solid electrolyte, they participate in a reaction with moisture in the atmosphere before the sulfide-based solid electrolyte. Through this, moisture stability of the sulfide-based solid electrolyte can be improved.

In addition, when heat treatment is applied to the La-containing fine particles, moisture in the La-containing fine particles can be removed. Therefore, after the La-containing fine particles in the solid electrolyte have participated in a reaction with moisture in the atmosphere to some extent, a continuous moisture stability improvement effect can be implemented by again removing moisture in the La-containing fine particles through heat treatment.

The heat treatment may be low-temperature heat treatment, and may be performed, for example, at a temperature of 100 to 500°C for 1 to 8 hours. When the heat treatment temperature and time satisfy the above ranges, a continuous moisture stability improvement effect can be implemented without significant deterioration of ionic conductivity by preventing deterioration of the crystal structure of the sulfide-based solid electrolyte.

At this time, the sulfide-based solid electrolyte particles and the La-containing fine particles may be present in a composite form with each other by physical or chemical bonding.

In addition, the plurality of La-containing fine particles may be present in a form in which they are attached to the surface of the sulfide-based solid electrolyte particles while being spaced apart from each other.

The La-containing fine particles may include, for example, a phase of La₂O₃, La(OH)₃, LaCl₃, LaC, LaPO₄, LaI₃, LaNO₃, or a combination thereof.

More specifically, the La-containing fine particles may include a La oxide. Among La compounds, particularly when the particles are a La oxide, reactivity with moisture becomes superior to other types of compounds, and thus the moisture stability improvement effect can be more preferably implemented.

The La oxide may include, for example, a phase of La₂O₃, La(OH)₃, or a combination thereof.

More specifically, the La-containing fine particles may include a La₂O₃ phase and may further include a La(OH)₃ phase. The La(OH)₃ phase may be a product generated as the La-containing fine particles react with moisture in the atmosphere.

That is, after manufacture of the solid electrolyte, the La-containing fine particles may simultaneously include a La₂O₃ phase and a La(OH)₃ phase over time.

In addition, the content of the La-containing fine particles may be 2 to 30 wt% based on the total weight of the solid electrolyte, and more specifically may be 2 to 25 wt% or 2 to 22 wt%. When the content of the La-containing fine particles is too small, the above-mentioned moisture stability improvement effect may be insignificant. When the content of the La-containing fine particles is too large, there may be a problem of deterioration of ionic conductivity due to increased resistance.

In addition, a ratio of the average particle diameter (D50) of the La-containing fine particles to the average particle diameter (D50) of the sulfide-based solid electrolyte may be 0.0005 to 0.017, and more specifically 0.0007 to 0.015. When the ratio of the average particle diameter of the La-containing fine particles to the average particle diameter of the sulfide-based solid electrolyte is too small, there may be a problem of non-uniform dispersion. When the ratio of the average particle diameter of the La-containing fine particles to the average particle diameter of the sulfide-based solid electrolyte is too large, there may be a problem in that coating of the La-containing fine particles on the sulfide-based solid electrolyte is not properly performed, and the moisture stability improvement effect becomes insignificant.

The average particle diameter (D50) of the sulfide-based solid electrolyte may be 0.6 to 12.0 µm, and more specifically 1.0 to 12.0 µm. When the average particle diameter of the sulfide-based solid electrolyte is too small, there may be an aggregation problem. When the average particle diameter of the sulfide-based solid electrolyte is too large, there may be a problem of increased lithium ion resistance in a cell.

The average particle diameter (D50) of the La-containing fine particles may be 5 to 400 nm, and more specifically 5 to 300 nm. When the average particle diameter of the La-containing fine particles is too small, there may be a problem of non-uniform dispersion. When the average particle diameter of the La-containing fine particles is too large, there may be a problem in that coating of the La-containing fine particles on the sulfide-based solid electrolyte is not properly performed, and the moisture stability improvement effect becomes insignificant.

Meanwhile, in the present specification, an average particle diameter (D50) may be defined as a particle diameter corresponding to 50% of a cumulative volume in a particle diameter distribution curve of particles. The average particle diameter (D50) may be measured, for example, using a laser diffraction method. The laser diffraction method generally enables measurement of particle diameters from a submicron region to several millimeters and can provide results with high reproducibility and high resolution.

The solid electrolyte may exhibit a first peak in a range of 30.2°≤2θ≤30.3° when analyzed by an X-ray diffraction (XRD) pattern. Since a peak in the above range may mean an argyrodite-based crystalline phase, excellent ionic conductivity can be implemented by having the first peak.

At this time, when the solid electrolyte is exposed for 60 minutes to an atmospheric atmosphere at 25°C and a relative humidity of 40%, a reduction rate of the intensity of the first peak may be 20% or less, and more specifically 16% or less. That is, since the solid electrolyte according to the present invention has improved moisture stability, the argyrodite-based crystal structure can be well maintained even when exposed for 60 minutes under the above environmental conditions. Accordingly, the intensity of the first peak can be well maintained, and deterioration of ionic conductivity can be prevented.

The solid electrolyte may exhibit a second peak in a range of 25.5°≤2θ≤25.7° when analyzed by an X-ray diffraction (XRD) pattern. Since a peak in the above range may mean an argyrodite-based crystalline phase, excellent ionic conductivity can be implemented by having the second peak.

At this time, when the solid electrolyte is exposed for 60 minutes to an atmospheric atmosphere at 25°C and a relative humidity of 40%, a reduction rate of the intensity of the second peak may be 20% or less, and more specifically 19% or less. That is, since the solid electrolyte according to the present invention has improved moisture stability, the argyrodite-based crystal structure can be well maintained even when exposed for 60 minutes under the above environmental conditions. Accordingly, the intensity of the second peak can be well maintained, and deterioration of ionic conductivity can be prevented.

### 2. Method for Manufacturing Solid Electrolyte

A method for manufacturing a solid electrolyte according to another embodiment of the present invention can obtain a solid electrolyte by preparing a sulfide-based solid electrolyte and La-containing fine particles and simply mixing them, and thus is very simple and economical.

More specifically, the method for manufacturing a solid electrolyte according to another embodiment of the present invention may include preparing a sulfide-based solid electrolyte; preparing La-containing fine particles; and mixing the sulfide-based solid electrolyte and the La-containing fine particles.

Hereinafter, the method for manufacturing a solid electrolyte according to another embodiment of the present invention will be described in detail step by step.

First, a sulfide-based solid electrolyte is prepared.

The sulfide-based solid electrolyte may be prepared by purchasing a commercially available sulfide-based solid electrolyte or may be manufactured according to a general method for manufacturing a sulfide-based solid electrolyte in the art.

More specifically, the sulfide-based solid electrolyte may be an argyrodite-based solid electrolyte.

The argyrodite-based solid electrolyte may be manufactured, for example, by a step of mixing a lithium raw material, a phosphorus raw material, and a halogen element raw material to form a mixture; and a step of heat-treating the mixture to form a sulfide-based solid electrolyte having an argyrodite-based crystal structure.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. More specifically, the halogen element raw material may be LiCl.

The mixing may be performed by mechanical mixing or chemical mixing.

The mechanical mixing may be performed, for example, by a method such as a planetary mill, a paint shaker, a ball mill, a bead mill, a homogenizer, a hammer mill, a turbo mill, a disc mill, a planetary mill, or mechanofusion.

The chemical mixing may be performed, for example, by a melt quenching method.

The mixing may be performed for 4 to 12 hours, specifically 6 to 10 hours, and more specifically 7 to 9 hours. When the mixing time is too short, the mixing is insufficient, so that synthesis of the solid electrolyte may not favorably occur in the heat treatment process described later. When the mixing time is too long, the mixing is completed after a certain time or more, and even when the mixing is further continued, the mixing state becomes the same, causing a problem in terms of process efficiency.

The mixing may be performed at a rotation speed of 100 to 500 rpm, specifically 150 to 450 rpm, and more specifically 200 to 400 rpm. When the rotation speed is too slow, there may be a problem in that the balls cannot enter into the powder body, so that the powder particles are not entirely mixed with each other sufficiently, or energy is low, so that atomization of the powder particles occurs insufficiently. On the other hand, when the rotation speed is too fast, there may be a problem in that the powder bodies are biased to one place, so that uniform mixing occurs insufficiently.

Of course, when a doping element is to be introduced into the argyrodite-based solid electrolyte, a doping raw material may be further mixed when forming the mixture.

Next, if necessary, after the step of forming the mixture, the method may further include compressing the mixture to form a pellet.

At this time, the compression may be performed at a pressure of 100 to 500 MPa, specifically 150 to 450 MPa, and more specifically 200 to 400 MPa. When the pressure is too low, there may be a problem in that bonding between powder particles is insufficient, thereby increasing interfacial resistance. On the other hand, when the pressure is too high, bonding between powder particles has already been achieved, and even when further pressure is applied, the bonding state does not change, causing a problem in terms of process efficiency. Therefore, forming the pellet at an appropriate pressure is preferable in terms of productivity.

Next, the mixture is heat-treated to form a sulfide-based solid electrolyte having an argyrodite-based crystal structure.

At this time, the heat treatment may be performed at a temperature of 400 to 700°C, and more specifically 500 to 600°C. When the heat treatment temperature is too low, synthesis of the solid electrolyte having an argyrodite-based crystal structure may not sufficiently occur, or the solid electrolyte may be synthesized with an amorphous crystal structure, and thus ionic conductivity of the solid electrolyte may decrease. When the heat treatment temperature is too high, elements constituting the solid electrolyte may be vaporized to cause loss of the solid electrolyte, or an impurity phase may be generated, and thus ionic conductivity of the solid electrolyte may decrease.

In addition, the heat treatment may be performed for 2 to 8 hours, and more specifically 3 to 5 hours. When the heat treatment time is too short, synthesis of the solid electrolyte having an argyrodite-based crystal structure may not sufficiently occur, or the solid electrolyte may be synthesized with an amorphous crystal structure, and thus ionic conductivity of the solid electrolyte may decrease. When the heat treatment time is too long, elements constituting the solid electrolyte may be vaporized to cause loss of the solid electrolyte, or an impurity phase may be generated, and thus ionic conductivity of the solid electrolyte may decrease.

In addition, the heat treatment may be performed in an inert gas atmosphere. Since the heat treatment is performed in an inert gas atmosphere, there may be an advantage of blocking contact with atmospheric moisture. The inert gas atmosphere may be, for example, an Ar, N₂, H₂, or He atmosphere, and more specifically may be an Ar atmosphere.

Through the above series of steps, a sulfide-based solid electrolyte may be manufactured.

The average particle diameter (D50) of the sulfide-based solid electrolyte may be 3 to 7 µm. The technical significance of controlling the average particle diameter of the sulfide-based solid electrolyte is as described above, and thus will be omitted.

Next, La-containing fine particles are prepared.

The La-containing fine particles may be prepared by obtaining commercially available La-containing fine particles.

At this time, the composition of the La-containing fine particles is as described above, and thus will be omitted.

In addition, the average particle diameter (D50) of the La-containing fine particles may be 5 to 400 nm. The technical significance of controlling the average particle diameter of the La-containing fine particles is as described above, and thus will be omitted.

In addition, the ratio of the average particle diameter (D50) of the La-containing fine particles to the average particle diameter (D50) of the sulfide-based solid electrolyte may be 0.0005 to 0.017. The technical significance of controlling the ratio of the average particle diameter (D50) of the La-containing fine particles to the average particle diameter (D50) of the sulfide-based solid electrolyte is as described above, and thus will be omitted.

Next, the sulfide-based solid electrolyte and the La-containing fine particles are mixed to form the solid electrolyte according to the present invention.

As described above, the solid electrolyte according to the present invention can be manufactured by simply mixing the sulfide-based solid electrolyte and the La-containing fine particles, and thus the manufacturing method is very simple and economical. In addition, as described in Experimental Examples below, the present inventors confirmed that, even when the sulfide-based solid electrolyte and the La-containing fine particles are simply mixed, they exhibit a composite structure in which they are physically or chemically bonded and attached. The present inventors believe that this is due to attraction between particles by Van der Waals forces.

The mixing may be performed by a mechanical mixing method.

The mechanical mixing may be performed, for example, by a method such as a planetary mill, a paint shaker, a ball mill, a bead mill, a homogenizer, a hammer mill, a turbo mill, a disc mill, a planetary mill, or mechanofusion.

At this time, the mixing may be performed at a stirring speed of 50 to 150 rpm. When the stirring speed is too slow, there may be a problem of non-uniform coating. When the stirring speed is too fast, there may be a problem of particle damage.

Meanwhile, the input amount of the La-containing fine particles may be 2 to 30 wt% based on the total weight of the solid electrolyte. The technical significance of controlling the content of the La-containing fine particles is as described above, and thus will be omitted.

### 3. All-Solid-State Battery

Still another embodiment of the present invention provides an all-solid-state battery including: a positive electrode layer; a negative electrode layer; and a solid electrolyte layer positioned between the positive electrode layer and the negative electrode layer, wherein at least one of the positive electrode layer, the negative electrode layer, and the solid electrolyte layer includes the above-described solid electrolyte.

### (Positive Electrode Layer)

More specifically, the positive electrode layer may include a positive electrode current collector and a positive electrode active material layer disposed on the positive electrode current collector.

The positive electrode active material layer may include, for example, a positive electrode active material and, if necessary, may further selectively include a solid electrolyte. The solid electrolyte included in the positive electrode active material layer may be the same as or different from the solid electrolyte according to one embodiment of the present invention, and may be the same as or different from the solid electrolyte included in the solid electrolyte layer.

The positive electrode active material is a material capable of reversibly absorbing and desorbing lithium ions. The positive electrode active material may be, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate; nickel sulfide, copper sulfide, lithium sulfide, iron oxide, vanadium oxide, or the like, but is not necessarily limited thereto, and any material used as a positive electrode active material in the art may be used. The positive electrode active material may be used alone, or a mixture of two or more thereof may be used.

The lithium transition metal oxide may be, for example, a compound represented by any one of the following chemical formulas: LiₐA_{1-β}B_{β}D₂, wherein 0.90≤a≤1 and 0≤b≤0.5; LiₐE_{1-β}B_{β}O₂₋cDc, wherein 0.90≤a≤1, 0≤b≤0.5, and 0≤c≤0.05; LiE_{2-β}B_{β}O₄₋cDc, wherein 0≤b≤0.5 and 0≤c≤0.05; LiₐNi_{1-β-}cCo_{β}BcD_{α}, wherein 0.90≤a≤1, 0≤b≤0.5, 0≤c≤0.05, and 0<α≤2; LiₐNi_{1-β-}cCo_{β}BcO_{2-α}F_{α}, wherein 0.90≤a≤1, 0≤b≤0.5, 0≤c≤0.05, and 0<α<2; LiₐNi_{1-β-}cCo_{β}BcO_{2-α}F₂, wherein 0.90≤a≤1, 0≤b≤0.5, 0≤c≤0.05, and 0<α<2; LiₐNi_{1-β-}cMn_{β}B_{c}D_{α}, wherein 0.90≤a≤1, 0≤b≤0.5, 0≤c≤0.05, and 0<α≤2; LiₐNi_{1-β-}cMn_{β}B_{c}O_{2-α}F_{α}, wherein 0.90≤a≤1, 0≤b≤0.5, 0≤c≤0.05, and 0<α<2; LiₐNi_{1-β-}cMn_{β}B_{c}O_{2-α}F₂, wherein 0.90≤a≤1, 0≤b≤0.5, 0≤c≤0.05, and 0<α<2; LiₐNi_{β}E_{c}G_{d}O₂, wherein 0.90≤a≤1, 0≤b≤0.9, 0≤c≤0.5, and 0.001≤d≤0.1; LiₐNi_{β}Co_{c}Mn_{d}GₑO₂, wherein 0.90≤a≤1, 0≤b≤0.9, 0≤c≤0.5, 0≤d≤0.5, and 0.001≤e≤0.1; LiₐNiG_{β}O₂, wherein 0.90≤a≤1 and 0.001≤b≤0.1; LiₐCoG_{β}O₂, wherein 0.90≤a≤1 and 0.001≤b≤0.1; LiₐMnG_{β}O₂, wherein 0.90≤a≤1 and 0.001≤b≤0.1; LiₐMn₂G_{β}O₄, wherein 0.90≤a≤1 and 0.001≤b≤0.1; QO₂; QS₂; LiQS₂; V₂O₅; LiV₂O₅; LiIO₂; LiNiVO₄; Li(_{3-f})J₂(PO₄)₃, wherein 0≤f≤2; Li(_{3-f})Fe₂(PO₄)₃, wherein 0≤f≤2; and LiFePO₄.

In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound in which a coating layer is added to a surface of such a compound, and it is also possible to use a mixture of the above-described compound and a compound to which a coating layer is added. The coating layer added to the surface of such a compound includes, for example, a coating element compound such as an oxide of a coating element, a hydroxide of a coating element, an oxyhydroxide of a coating element, an oxycarbonate of a coating element, or a hydroxycarbonate of a coating element. The compound constituting such a coating layer may be amorphous or crystalline. The coating element included in the coating layer may be Mg, Al, Co, K, Na, Ca, Si, Ti, V, Sn, Ge, Ga, B, As, Zr, or a mixture thereof. A method for forming the coating layer is selected within a range that does not adversely affect the physical properties of the positive electrode active material. The coating method is, for example, spray coating, dipping, or the like. A detailed coating method can be well understood by persons working in the art, and thus a detailed description thereof will be omitted.

The positive electrode active material layer may include, for example, a binder. The binder may be, for example, styrene butadiene rubber (SBR), polytetrafluoroethylene, polyvinylidene fluoride, polyethylene, or the like, but is not limited thereto, and any material used as a binder in the art may be used.

The positive electrode active material layer may include, for example, a conductive material. The conductive material may be, for example, graphite, carbon black, acetylene black, Ketjen black, carbon fibers, metal powder, or the like, but is not limited thereto, and any material used as a conductive material in the art may be used.

The positive electrode active material layer may further include additives such as a filler, a coating agent, a dispersant, and an ion-conductive auxiliary agent, in addition to the above-described positive electrode active material, solid electrolyte, binder, and conductive material.

As the filler, coating agent, dispersant, ion-conductive auxiliary agent, and the like that may be included in the positive electrode active material layer, known materials generally used in an electrode of an all-solid-state secondary battery may be used.

As the positive electrode current collector, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The thickness of the positive electrode current collector may be, for example, 1 µm to 100 µm, 1 µm to 50 µm, 5 µm to 25 µm, or 10 µm to 20 µm.

### (Negative Electrode Layer)

More specifically, the negative electrode layer may include a negative electrode current collector and a negative electrode active material layer disposed on the negative electrode current collector.

The negative electrode active material layer may include, for example, a negative electrode active material and a binder, and may further selectively include a solid electrolyte as necessary.

The negative electrode active material may include, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon may be, for example, carbon black (CB), acetylene black (AB), furnace black (FB), Ketjen black (KB), graphene, or the like, but is not necessarily limited thereto, and any material classified as amorphous carbon in the art may be used. The amorphous carbon is carbon having no crystallinity or very low crystallinity, and is distinguished from crystalline carbon or graphitic carbon. The crystalline carbon may be, for example, natural graphite, artificial graphite, or a combination thereof.

The metal/metalloid negative electrode active material includes at least one selected from the group consisting of lithium (Li), gold (Au), platinum (Pt), palladium (Pd), silicon (Si), silver (Ag), aluminum (Al), bismuth (Bi), tin (Sn), and zinc (Zn), but is not necessarily limited thereto, and any material used as a metal negative electrode active material or metalloid negative electrode active material that forms an alloy or compound with lithium in the art may be used.

The binder included in the negative electrode active material layer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any material used as a binder in the art may be used. The binder may be composed of a single binder or a plurality of different binders.

Since the negative electrode active material layer includes the binder, the negative electrode active material layer is stabilized on the negative electrode current collector. In addition, cracking of the negative electrode active material layer is suppressed despite volume change and/or relative position change of the negative electrode active material layer during charging and discharging.

The negative electrode active material layer may further include additives used in conventional all-solid-state batteries, for example, a filler, a coating agent, a dispersant, an ion-conductive auxiliary agent, and the like.

The all-solid-state battery may further include a second negative electrode active material layer disposed between the negative electrode current collector and the negative electrode active material layer by charging. The second negative electrode active material layer may be precipitated between the negative electrode current collector and the negative electrode current collector during a charging process, or may be further disposed on the negative electrode active material layer during electrode assembly. The second negative electrode active material layer may be a metal layer including lithium or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any material used as a lithium alloy in the art may be used. The second negative electrode active material layer may be formed of one of these alloys and/or lithium, or may be formed of several kinds of alloys and/or lithium.

The negative electrode current collector may be composed of, for example, a material that does not react with lithium, that is, a material that does not form either an alloy or a compound. The negative electrode current collector may include, for example, copper (Cu), stainless steel, titanium (Ti), iron (Fe), cobalt (Co), nickel (Ni), or the like, but is not necessarily limited thereto, and any material used as an electrode current collector in the art may be used. The negative electrode current collector may be composed of one of the above metals or may be composed of an alloy or coating material of two or more metals. The negative electrode current collector may be, for example, in a plate form or a foil form.

When the negative electrode active material layer includes a solid electrolyte, the solid electrolyte included in the negative electrode active material layer may be the same as or different from the solid electrolyte according to one embodiment of the present invention, and may be the same as or different from the solid electrolyte included in the solid electrolyte layer.

### (Solid Electrolyte Layer)

The solid electrolyte layer may be manufactured by mixing and drying the above-described solid electrolyte and a binder, or may be manufactured by rolling the above-described solid electrolyte powder into a certain form at a pressure of 1 ton to 10 tons.

At this time, the solid electrolyte may be in a powder form or a molded body form. The solid electrolyte in the molded body form may be, for example, in the form of a pellet, a sheet, a thin film, or the like, but is not necessarily limited thereto, and may have various forms depending on the use.

The solid electrolyte layer may further include, as necessary, a solid electrolyte such as a conventional sulfide-based solid electrolyte and/or oxide-based solid electrolyte, in addition to the above-described solid electrolyte.

The binder may be, for example, styrene butadiene rubber (SBR), polytetrafluoroethylene, polyvinylidene fluoride, polyethylene, polyvinyl alcohol, or the like, but is not limited thereto, and any material used as a binder in the art may be used. The binder of the solid electrolyte layer may be the same as or different from the binder of the positive electrode layer and the negative electrode layer.

Still another embodiment of the present invention provides an electric vehicle including the all-solid-state battery.

Hereinafter, embodiments of the present invention will be described in more detail through Examples. However, the following Examples are merely preferred embodiments of the present invention, and the present invention is not limited by the following Examples.

### Example 1

Argyrodite-based solid electrolyte powder having a composition of Li₆PS₅Cl was prepared by a conventional manufacturing method. At this time, the average particle diameter (D50) of the solid electrolyte was 1.1 µm.

Thereafter, La₂O₃ (Aldrich) powder was prepared. At this time, the average particle diameter (D50) of the La₂O₃ particles was 10 nm.

Thereafter, the solid electrolyte powder and the La₂O₃ powder were placed in a reactor and mixed using a planetary mixer at a stirring speed of 100 rpm for 2 minutes, thereby manufacturing a solid electrolyte. At this time, the input amount of the La₂O₃ powder was adjusted so that the content of the La₂O₃ powder became 3 wt% based on the total weight of the solid electrolyte.

### Comparative Example 1

A solid electrolyte was manufactured in the same manner as in Example 1, except that argyrodite-based solid electrolyte powder having a composition of Li₆PS₅Cl was prepared by a conventional manufacturing method, and La₂O₃ powder was not mixed.

### Other Examples and Reference Examples

Solid electrolytes were manufactured in the same manner as in Example 1, except that the average particle diameter (D50) of the solid electrolyte particles, the average particle diameter (D50) of the La₂O₃ particles, and the content of La₂O₃ were changed as shown in Table 1 below.

Table 1 below summarizes process conditions of the Examples, Comparative Example, and Reference Examples.

**[Table 1]**

| | Solid Electrolyte Average Particle Diameter (D50, µm) | La-Containing Fine Particle Average Particle Diameter (D50, nm) | La-Containing Fine Particle Content (wt%) | La-Containing Fine Particle/Solid Electrolyte Average Particle Diameter Ratio |
|---|---|---|---|---|
| Comparative Example 1 | 3.1 | - | 0 | - |
| Reference Example 1 | 0.7 | 10 | 1 | 0.0143 |
| Example 1 | 1.1 | 10 | 3 | 0.0091 |
| Example 2 | 2.1 | 10 | 5 | 0.0048 |
| Example 3 | 3.3 | 10 | 10 | 0.0030 |
| Example 4 | 5.4 | 10 | 15 | 0.0019 |
| Example 5 | 10.6 | 10 | 20 | 0.0009 |
| Reference | 0.5 | 10 | 5 | 0.0200 |
| Example 4 | | | | |
| Reference Example 5 | 0.1 | 10 | 5 | 0.1000 |
| Reference Example 6 | 3 | 500 | 5 | 0.1667 |
| Reference Example 7 | 3 | 1000 | 5 | 0.3333 |

Table 2 below shows experimental results of evaluating physical properties of the solid electrolytes according to Experimental Examples 1 and 2, which will be described later.

**[Table 2]**

| | First Peak Reduction Rate (%) | Second Peak Reduction Rate (%) | Ionic Conductivity Before Atmospheric Exposure (mS/cm) | Ionic Conductivity After Atmospheric Exposure (mS/cm) | Moisture Stability (%) |
|---|---|---|---|---|---|
| Comparative Example 1 | 29 | 27 | 3.2 | 2.08 | 65 |
| Reference Example 1 | 31 | 32 | 1.5 | 1.05 | 70 |
| Example 1 | 15 | 19 | 1.8 | 1.44 | 80 |
| Example 2 | 12 | 17 | 2.8 | 2.32 | 83 |
| Example 3 | 10 | 8 | 2.0 | 1.66 | 83 |
| Example 4 | 5 | 7 | 2.6 | 2.21 | 85 |
| Example 5 | 4 | 5 | 3.7 | 3.29 | 89 |
| Reference Example 4 | 39 | 45 | 0.5 | 0.38 | 76 |
| Reference Example 5 | 41 | 49 | 0.1 | 0.08 | 75 |
| Reference Example 6 | 41 | 49 | 2.8 | 2.00 | 71 |
| Reference Example 7 | 40 | 42 | 2.2 | 1.52 | 69 |

### Experimental Example 1: Evaluation of SEM Images of Solid Electrolyte

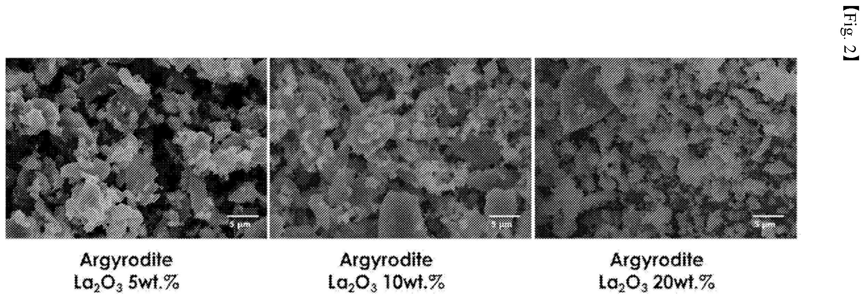

SEM (scanning electron microscope) images of the solid electrolytes manufactured according to Example 2, Example 3, and Reference Example 3 were observed, and are shown in FIG. 2, respectively.

Referring to FIG. 2, it was confirmed that the solid electrolytes according to the Examples and Reference Example exhibited a composite structure in which a plurality of La-containing fine particles were attached to the surface of the sulfide-based solid electrolyte particles.

### Experimental Example 2: Evaluation of X-Ray Diffraction Pattern of Solid Electrolyte

XRD (X-ray diffraction) analysis experiments were performed on the solid electrolytes manufactured according to the Examples, Comparative Example, and Reference Examples.

At this time, X-ray diffraction analysis immediately after manufacture and X-ray diffraction analysis after exposure for a certain time to an atmospheric atmosphere at 25°C and a relative humidity of 40% were performed for each of the Examples, Comparative Example, and Reference Examples. At this time, it was confirmed that all the solid electrolytes manufactured according to the Examples, Comparative Example, and Reference Examples exhibited a first peak, which is a maximum peak, in a range of 30.2°≤2θ≤30.3°, and a second peak, which is a second maximum peak, in a range of 25.5°≤2θ≤25.7°. Thereafter, after 60 minutes elapsed, reduction rates of the first peak intensity and the second peak intensity were each derived as a percentage (%), and are shown in Table 2 above.

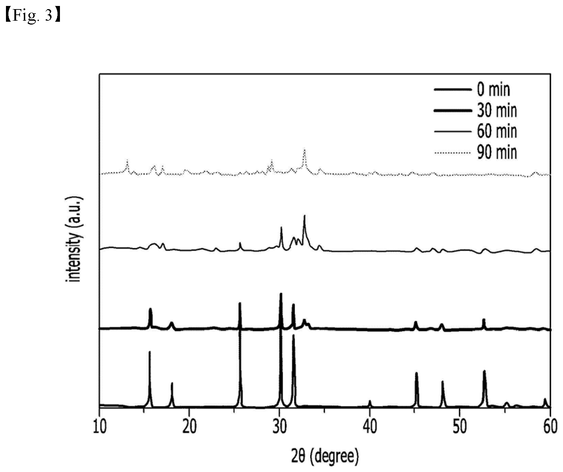

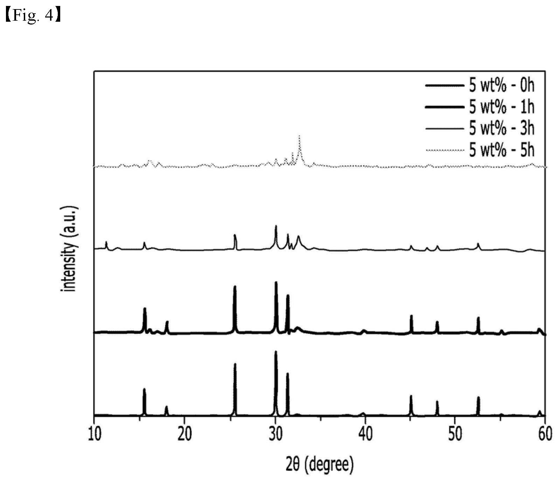

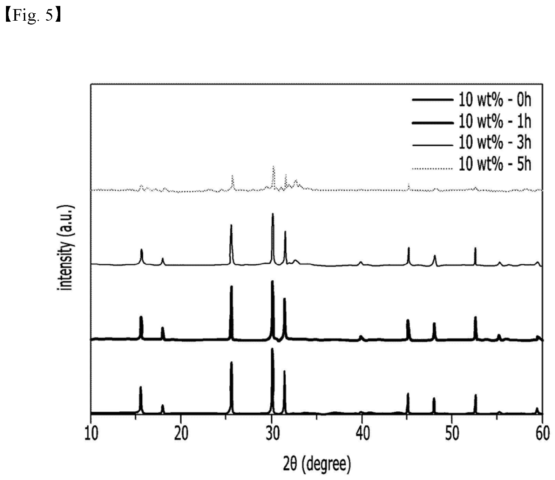

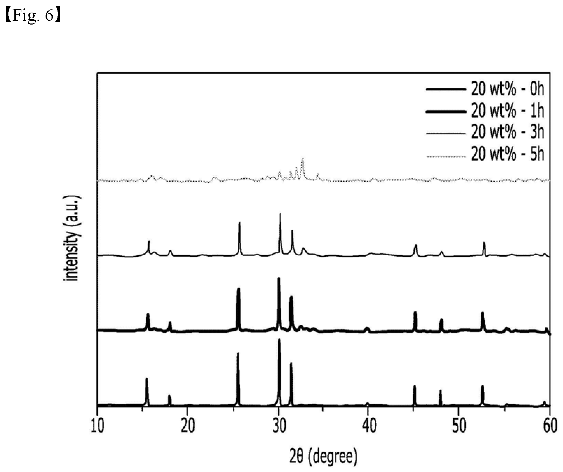

FIGS. 3 to 6 show results of X-ray diffraction pattern analysis over time of the solid electrolytes manufactured according to Comparative Example 1, Example 2, Example 3, and Reference Example 3, respectively.

Referring to Table 2 and FIGS. 3 to 6, it was confirmed that, in the solid electrolytes of the Examples, as a result of including La-containing fine particles and appropriately controlling the content of the La-containing fine particles and the average particle diameter ratio of the La-containing fine particles to the solid electrolyte, reduction rates of the first and second peak intensities were significantly reduced. This can be interpreted as a result of the solid electrolytes of the Examples having improved moisture stability and reduced deterioration of the argyrodite crystal structure.

Meanwhile, in the case of Comparative Example 1, in which La-containing fine particles were not composited, it was confirmed that the reduction rates of the first peak and the second peak were large. Accordingly, it was confirmed that moisture stability deteriorated and deterioration of the argyrodite crystal structure proceeded.

In the case of Reference Example 1, as a result of the content of the La-containing fine particles being too small, it was confirmed that the reduction rates of the first peak and the second peak were large. This can be interpreted as a result of the effect of improving moisture stability by including La fine particles being weaker than that of the Examples, and thus deterioration of the argyrodite crystal structure proceeded.

In addition, in the case of Reference Examples 4 to 7, in which the average particle diameter ratio of the La-containing fine particles to the solid electrolyte was too large, it was confirmed that the reduction rates of the first peak and the second peak were large. Through this, it was confirmed that the average particle diameter ratio of the La-containing fine particles to the solid electrolyte is also a factor affecting the moisture stability improvement effect, and Reference Examples 4 to 7 have a weaker moisture stability improvement effect than the Examples.

### Experimental Example 3: Evaluation of Ionic Conductivity and Moisture Stability of Solid Electrolyte

### (1) Evaluation of Ionic Conductivity Before Atmospheric Exposure (25°C)

An experiment for evaluating ionic conductivity of the solid electrolyte was performed using a pressure powder cell. Specifically, after the synthesized solid electrolyte was pulverized, it was manufactured in a pellet form under a pressure of 300 MPa. Thereafter, a cell was manufactured at a pressure of 700 MPa using SUS as a working electrode. Thereafter, impedance was measured by applying a voltage of 10 mV at 25°C.

### (2) Evaluation of Ionic Conductivity After Atmospheric Exposure (25°C)

In a dry room having a dew point of about -40°C, 2 g of the solid electrolyte in a powder form was left for about 12 hours, and then recovered, and impedance was remeasured in the same manner as described above.

### (3) Evaluation of Moisture Stability

Moisture stability was derived by converting, into a percentage (%), a value of ionic conductivity after atmospheric exposure relative to ionic conductivity before atmospheric exposure derived above.

Referring to Table 2, it was confirmed that the solid electrolytes of Examples 1 to 5 not only had excellent ionic conductivity before atmospheric exposure, but also had excellent improvement in moisture stability.

In contrast, in the case of Comparative Example 1, as a result of La-containing fine particles not being composited, it was confirmed that moisture stability was significantly deteriorated compared with the Examples.

In the case of Reference Example 1, as a result of the content of the La-containing fine particles being too small, it was confirmed that the moisture stability improvement effect was deteriorated compared with the Examples.

In the case of Reference Examples 4 to 7, as a result of the ratio of the average particle diameter of the La-containing fine particles to the average particle diameter of the solid electrolyte being too large, it was confirmed that the moisture stability improvement effect was deteriorated compared with the Examples. In particular, in the case of Reference Examples 4 and 5, it was confirmed that ionic conductivity before atmospheric exposure was also too deteriorated.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A solid electrolyte comprising:
sulfide-based solid electrolyte particles; and
a plurality of La-containing fine particles disposed on a surface of the sulfide-based solid electrolyte particles.

2. The solid electrolyte of claim 1,
wherein the sulfide-based solid electrolyte particles are argyrodite-based solid electrolyte particles.

3. The solid electrolyte of claim 1,
wherein the plurality of La-containing fine particles are present in a form in which they are attached to the surface of the sulfide-based solid electrolyte particles while being spaced apart from each other.

4. The solid electrolyte of claim 1,
wherein the La-containing fine particles include a La oxide.

5. The solid electrolyte of claim 1,
wherein the La-containing fine particles include a La₂O₃ phase.

6. The solid electrolyte of claim 1,
wherein the La-containing fine particles further include a La(OH)₃ phase.

7. The solid electrolyte of claim 1,
wherein a content of the La-containing fine particles is 2 to 30 wt% based on a total weight of the solid electrolyte.

8. The solid electrolyte of claim 1,
wherein a ratio of an average particle diameter (D50) of the La-containing fine particles to an average particle diameter (D50) of the sulfide-based solid electrolyte is 0.0005 to 0.017.

9. The solid electrolyte of claim 1,
wherein an average particle diameter (D50) of the sulfide-based solid electrolyte is 0.6 to 12.0 µm.

10. The solid electrolyte of claim 1,
wherein an average particle diameter (D50) of the La-containing fine particles is 5 to 400 nm.

11. The solid electrolyte of claim 1,
wherein the solid electrolyte exhibits a first peak in a range of 30.2°≤2θ≤30.3° when analyzed by an X-ray diffraction (XRD) pattern.

12. The solid electrolyte of claim 11,
wherein, when the solid electrolyte is exposed for 60 minutes to an atmospheric atmosphere at 25°C and a relative humidity of 40%, a reduction rate of an intensity of the first peak is 20% or less.

13. The solid electrolyte of claim 1,
wherein the solid electrolyte exhibits a second peak in a range of 25.5°≤2θ≤25.7° when analyzed by an X-ray diffraction (XRD) pattern.

14. The solid electrolyte of claim 13,
wherein, when the solid electrolyte is exposed for 60 minutes to an atmospheric atmosphere at 25°C and a relative humidity of 40%, a reduction rate of an intensity of the second peak is 20% or less.

15. An all-solid-state battery comprising the solid electrolyte of claim 1.
